Europäisches Patentamt

(19) European Patent Office

Office européen des brevets

(11) Numéro de publication : **0 455 537 A1**

# (12) DEMANDE DE BREVET EUROPEEN

(21) Numéro de dépôt : **91401052.5**

(22) Date de dépôt : **19.04.91**

(51) Int. Cl.⁵ : **H02P 8/00**

---

(30) Priorité : **02.05.90 FR 9005535**

(43) Date de publication de la demande :
**06.11.91 Bulletin 91/45**

(84) Etats contractants désignés :
**DE ES GB IT NL SE**

(71) Demandeur : **AEROSPATIALE Société
Nationale Industrielle
37, Boulevard de Montmorency
F-75781 Paris Cédex 16 (FR)**

(72) Inventeur : **Bajat, Thierry
Les Piboules, Bât. 1, 984 avenue Janvier
Pasero
F-06210 Mandelieu (FR)**
Inventeur : **Digoin, Jean-Jacques
Domaine de Séguret No.9, Corniche de Sarde
F-83600 Les Adrets (FR)**

(74) Mandataire : **Rinuy, Santarelli
14, avenue de la Grande Armée
F-75017 Paris (FR)**

---

(54) **Dispositif de simulation pour moteur pas à pas.**

(57)    Un dispositif de simulation de commande pour un moteur pas-à-pas (M2, M4) à N enroulements comporte :
— un étage numérique de génération de signal (A') comportant :
. une unité de calcul comportant une unité centrale (2), à laquelle sont connectés un module périphérique d'entrées/sorties (4) destiné à un utilisateur, un module (3) de mémoire et un module d'horloge (4) de fréquence f,
. une pluralité d'au moins N unités de mémoire déclenchable (9) identiques connectées en parallèle à l'unité de calcul, pilotées par le module d'horloge et suivies chacune par un convertisseur numérique-analogique identique, ces unités de mémoire étant destinées à contenir des suites cycliques de $m$ valeurs de signal de période $n$, sensiblement identiques d'une unité de mémoire à l'autre à un décalage de n/4 près correspondant à un pas,
— un étage analogique de puissance comportant une pluralité de N convertisseurs tension-courant (11') identiques, raccordés chacun à la sortie d'un convertisseur numérique-analogique et dont la sortie est destinée à être raccordée à l'un des enroulements dudit moteur pas-à-pas, pour lui appliquer un signal de fréquence f/n.

EP 0 455 537 A1

Fig.1B

L'invention concerne la commande de moteurs pas à pas, en particulier ceux de ces moteurs qui sont destinés à être soumis à des ambiances sévères telles que, notamment, ambiance cryogénique, ambiance parasitée, vide spatial ...

Plus précisément, l'invention concerne, non pas tant le fonctionnement en service de ces moteurs, que principalement les phases préalables de développement et d'essais concernant ces moteurs pas à pas et leurs dispositifs de commande (les signaux de commande sont en pratique périodiques).

En pratique, lorsque l'on veut tester un moteur pas à pas dans ses conditions de fonctionnement futur en service, on procède le plus souvent à des essais de la totalité du mécanisme auquel ce moteur pas à pas doit être intégré. Il en résulte des contraintes d'encombrement qui, ajoutées aux contraintes résultant de la simulation de l'ambiance sévère de fonctionnement en service, rendent en pratique inaccessibles ces moteurs pour y placer des capteurs de mesure destinés à surveiller le fonctionnement de ce moteur et du couple qu'il est adapté à fournir.

Il paraît donc indispensable, pour procéder à des essais précis de moteurs pas à pas, de les tester à titre isolé, en dehors des mécanismes auxquels ils sont destinés à être intégrés ; mais de tels essais supposent de pouvoir simuler aussi exactement que possible, sous réserve de le connaître, le régime réel d'alimentation de ces moteurs pas à pas en service. Or, les systèmes de simulation de commande pour moteurs pas à pas qui existent actuellement sur le marché industriel, ne permettent de simuler qu'un petit nombre de régimes types d'alimentation, conventionnels, en pratique éloignés des régimes réels d'alimentation surtout en cas d'ambiance sévère. C'est ainsi que l'on connaît déjà diverses systèmes ou cartes électroniques adaptés à générer des signaux de commande classiques, du genre impulsions, signaux carrés, sinus/cosinus. Une solution un peu plus performante est proposée par le document FR-2.440.642. Il y est enseigné, dans le cas d'un moteur à quatre enroulements, comment, de manière strictement numérique, appliquer aux enroulements, à l'un d'entre eux ou à deux d'entre eux simultanément, des courants intermédiaires entre un niveau zéro et un niveau maximum, par exemple des niveaux correspondant à un tiers et deux tiers de ce niveau maximum. Toutefois, compte tenu du nombre nécessairement limité de ces niveaux intermédiaires, l'enseignement de ce document ne permet qu'une simulation très approximative d'une courbe réelle comportant une multitude de niveaux intermédiaires entre ses niveaux extrêmes.

Pourtant le besoin d'une simulation précise du régime d'alimentation et du fonctionnement d'un moteur pas à pas est particulièrement critique dans le cas des applications spatiales. Or l'utilisation de moteurs pas à pas embarqués à bord de satellites est de plus en plus fréquente. Les moteurs pas à pas y sont contraints à travailler dans des ambiances très sévères, du fait notamment du vide spatial. Dans certains cas, les moteurs pas à pas sont mêmes utilisés en ambiance cryogénique, notamment à des fins de motorisation de systèmes d'observations infrarouges. Il est rappelé à ce propos que la cryogénie peut être définie comme la technique des basses températures, c'est-à-dire en pratique les températures inférieures à -173°C environ, c'est-à-dire le domaine dans lequel se trouvent à l'état liquide les principaux gaz permanents, tels que hydrogène, azote, oxygène et air. Un domaine d'importance particulière se situe à l'approche du zéro absolu ($0°K$) c'est-à-dire à des températures d'environ 3 à 4 °K.

Il est bien évident que la simulation à la température ambiante du comportement d'un moteur pas à pas en ambiance cryogénique suppose de s'abstraire de toute influence de la température. Il convient donc de simuler le régime d'alimentation d'un moteur pas à pas destiné à une application cryogénique en terme d'intensité et non pas de tension. De ce point de vue, le document FR-2-440.642 précité apporte une réponse, tout à fait partielle on l'a vu, à cette exigence.

Le caractère assez rudimentaire des dispositifs actuellement connus pour la génération des signaux de commande d'un moteur pas à pas, c'est-à-dire le dispositif déterminant le régime d'alimentation de ceux-ci, explique la démarche empirique suivie jusqu'à présent lors du développement d'un quelconque mécanisme devant intégrer un moteur pas à pas. A partir d'une évaluation grossière du régime couple à obtenir, on choisit parmi des types conventionnels de signaux (impulsions, créneaux, sinus/cosinus..) celui qui paraît le mieux approprié pour obtenir le couple voulu. On détermine ensuite le niveau de puissance du moteur pas à pas à mettre en oeuvre, pour fournir le couple voulu à l'aide du régime d'alimentation simplifiée choisi, après prise en compte d'une marge de puissance de motorisation visant à intégrer la méconnaissance que l'on a du comportement réel qu'aura ce moteur pas à pas en service par la suite.

L'invention a pour objet de pallier les inconvénients précités en proposant un outil de développement et de test pour moteurs pas à pas, que l'on pourra appeler banc universel de commande adaptative, qui permette une commande en courant de ces moteurs pas à pas tout en offrant, en plus des commandes classiques (sinus/cosinus, créneaux ou impulsions), la possibilité d'appliquer tout signal de commande particulier. Les moteurs pas à pas à tester ou développer pourront être d'un type quelconque, à deux ou quatre phases, dans la gamme des produits existants sur le marché industriel, ou des produits spécifiques futurs devant être développés pour une application particulière.

L'invention propose à cet effet un dispositif de simulation de commande pour un moteur pas-à-pas à N enroulements, comportant :

– un étage numérique de génération de signal comportant :

. une unité de calcul comportant une unité centrale, à laquelle sont connectés un module périphérique d'entrées/sorties destiné à un utilisateur, un module de mémoire et un module d'horloge de fréquence $\underline{f}$,

. une pluralité d'au moins N unités de mémoire déclenchable identiques connectées en parallèle à l'unité de calcul, pilotées par le module d'horloge et suivies chacune par un convertisseur numérique-analogique identique, ces unités de mémoire étant destinées à contenir des suites cycliques de $\underline{m}$ valeurs de signal de période $\underline{n}$, sensiblement identiques d'une unité de mémoire à l'autre à un décalage de n/4 près correspondant à un pas,

– un étage analogique de puissance comportant une pluralité de N convertisseurs tension-courant identiques, raccordés chacun à la sortie d'un convertisseur numérique-analogique et dont la sortie est destinée à être raccordée à l'un des enroulements dudit moteur pas-à-pas, pour lui appliquer un signal de fréquence f/n.

L'invention consiste ainsi à générer des signaux de commande au moyen d'un calculateur associé à une électronique d'interface. Ces signaux sont directement reproduits au niveau des enroulements du moteur pas à pas (commande en courant) et peuvent être de n'importe quel type, sous réserve que leur amplitude maximale soit acceptable par le moteur. L'invention permet non seulement de reproduire les lois de commande de moteurs pas à pas, qui peuvent rappelons-le être soumis à des ambiances sévères, mais aussi de déterminer ces lois, par exemple à partir de la donnée de l'évolution du couple à obtenir ; par exemple on peut vouloir éviter toute variation brusque du couple de sortie pour ne pas solliciter mécaniquement de manière abusive des pièces mécaniques (par exemple des engrenages montés en aval du moteur). Cette possibilité de détermination des lois de commande provient en particulier de la capacité de l'invention à générer des lois de commande de n'importe quel profil : il devient donc possible par essais successifs de définir le profil, éventuellement complexe, d'une loi de commande permettant de fournir un couple sans variation brusque par exemple.

Il est à noter que l'invention permet la commande des moteurs pas à pas, non seulement en pas réel, mais aussi en sous-multiples de pas.

Parmi les avantages de l'invention il faut noter la possibilité de programmer pour le moteur, pour le début ou la fin d'un essai, un premier pas et/ou un dernier pas d'amplitude et/ou de durée différente des autres pas (en particulier de ceux des pas qui en sont décalés d'une période). Cela peut permettre d'éviter l'apparition de régimes transitoires au début et/ou à la fin de l'essai. Ce résultat peut être obtenu par logiciel, en stockant dans les unités de mémoire déclenchable, d'une part les points de la courbe désirée pour ce premier (ou dernier) pas, d'autre part les points de la courbe "normale" désirée pour les autres pas.

Cette commande avec un premier pas différent est très avantageuse car elle permet de s'affranchir de bon nombre de problèmes notamment d'un phénomène d'oscillation de l'arbre moteur.

Des essais effectués au titre du programme ISOCAM ont démontré l'intérêt de cette commande qui optimise la loi de commande et le régime de fonctionnement de l'électromécanisme. L'expérience a montré que cette loi de commande était difficilement approchable par une modélisation et que sa détermination par la voie de la simulation avec éléments réels était très appréciable. La même approche peut être faite sur les derniers pas.

On appréciera que l'invention permet de déterminer ou à tout le moins de reproduire en ambiance laboratoire le régime d'alimentation d'un moteur pas à pas, quelle que soit son application, et quelle que soit l'allure, aussi complexe soit-elle, du courant appliqué en service à chacun de ses enroulements. Ce résultat est pourtant obtenu, selon l'invention, avec des moyens de mise en oeuvre aisés et rapides, fiables et de relativement bon marché.

Selon une caractéristique particulièrement avantageuse, originale en soi, le dispositif de simulation comporte un étage numérique de génération de signal à quatre unités de mémoire déclenchable, un premier étage analogique de puissance à deux convertisseurs tension/ courant et un second étage analogique de puissance à quatre convertisseurs tension/courant, ainsi qu'un circuit de commutation, par exemple commandé par l'unité de calcul, adapté à connecter, au choix, deux prédéterminées des unités de mémoire déclenchable au premier étage analogique de puissance, ou les quatre unités de mémoire déclenchable au second étage analogique de puissance.

Un tel dispositif permet ainsi de tester aussi bien des moteurs pas à pas à deux enroulements que des moteurs pas à pas à quatre enroulements.

Selon des dispositions préférées de l'invention, éventuellement combinées :

– chaque convertisseur numérique-analogique et l'unité de mémoire déclenchable associée forme conjointement une même carte,

– la pluralité de convertisseurs tension/courant de l'étage analogique de puissance est regroupée sur une même carte,

– le module d'horloge a une fréquence avantageusement programmable au moins 100 fois supérieure à la fréquence du signal de commande appliqué à chaque enroulement, c'est-à-dire que $\underline{n}$ est au moins égal à 100,

– de manière préférée, $\underline{n}$ est au moins égal à 1000,

– le moteur étant à deux phases, chaque convertisseur tension/courant comporte un amplificateur opérationnel, dont l'entrée non inverseuse reçoit un signal de tension, dont la sortie est appliquée à la borne positive de l'enroulement associé et dont l'entrée inverseuse est connectée à la borne négative de l'enroulement en étant reliée à la masse par une résistance.

– le moteur étant à quatre phases, chaque convertisseur tension/courant comporte un amplificateur opérationnel, dont l'entrée non inverseuse reçoit un signal de tension, dont la sortie est connectée à la grille d'un transistor MOS dont la source est connectée à l'enroulement considéré, et dont l'entrée inverseuse est connectée au drain du transistor MOS en étant reliée à la masse par une résistance.

Des objets, caractéristiques et avantages de l'invention ressortent de la description qui suit, donnée à titre d'exemple non limitatif, en regard des dessins annexés sur lesquels :

– la figure 1A est un schéma de principe d'un dispositif de simulation de commande de moteur pas-à-pas conforme à l'invention, dans le cas de quatre enroulements,

– la figure 1B est le schéma de principe d'un autre dispositif de simulation pour le cas d'un moteur pas-à-pas à deux enroulements,

– la figure 1C est le schéma de principe simplifié d'encore un autre dispositif de simulation de commande d'un moteur pas à pas, ce dernier pouvant être aussi bien à deux qu'à quatre enroulements.

– les figures 2A et 2B représentent dans un cas simple les courbes d'intensité en fonction du temps dans deux enroulements d'un moteur pas-à-pas,

– les figures 3A et 3B représentent, respectivement et dans ce même cas simple, le signal d'horloge H et le signal de tension $U_1$ généré par un convertisseur numérique-analogique,

– la figure 4 est un schéma de réalisation du dispositif de la figure 1A dans le cas d'un moteur pas-à-pas à quatre phases,

– la figure 5 est un schéma similaire pour un moteur pas-à-pas à deux phases,

– la figure 6 est un organigramme élémentaire du logiciel associé au dispositif de la figure 1C,

– la figure 7 est un schéma général de l'étage de puissance dans le cas d'un moteur pas-à-pas à deux phases,

– la figure 8 est un schéma analogue pour le cas d'un moteur pas-à-pas à quatre phases,

– la figure 9 est un schéma électronique simplifié de l'étage de puissance de la figure 7,

– la figure 10 est un schéma électronique similaire pour le cas de la figure 8,

– la figure 11 est un schéma électronique détaillé de l'étage de puissance de la figure 7,

– la figure 12 est un schéma électronique détaillé de l'étage de puissance de la figure 8,

– la figure 13 est un enregistrement du courant d'une phase d'un moteur à quatre phases à 4°K, et

– la figure 14 montre les profils au cours du temps d'une courbe d'intensité mesurée sur un enroulement et que l'on a voulu reproduire, et de la courbe en tension obtenue à l'une des sorties de l'étage de génération de signal.

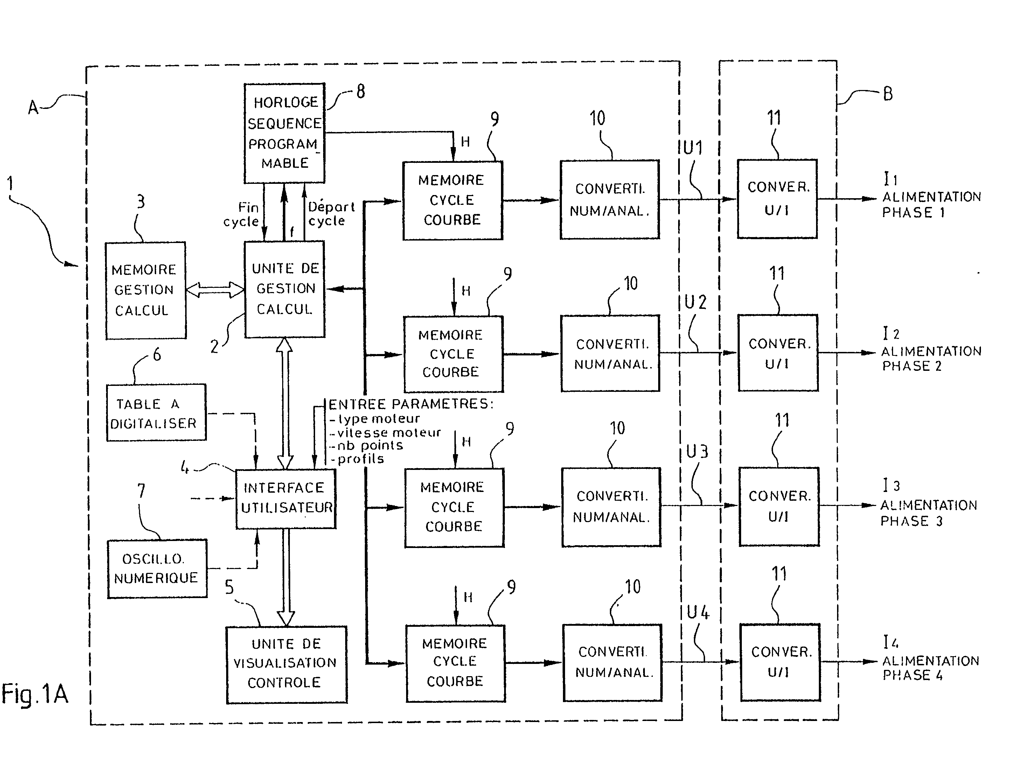

La figure 1A représente la structure générale d'un dispositif ou banc de simulation de commande 1 comportant un étage numérique de génération de signal A et un étage analogique de puissance B.

En fait l'étage A n'est pas entièrement numérique puisqu'un signal analogique en sort, mais ce qualitatif de "numérique" vise à qualifier le processus d'élaboration du signal, par opposition au processus analogique qui intervient dans l'étage B.

L'étage A de génération de signal comporte une unité de gestion et de calcul 2 dotée d'une mémoire spécifique de gestion et de calcul notée 3. Cette unité de gestion et de calcul 2 est connectée à au moins un module périphérique d'entrées-sorties, noté 4, constituant un interface vis à vis d'un utilisateur. Ce module comporte en pratique un clavier et est doté d'une unité de visualisation et de contrôle 5, par exemple tout simplement constituée d'un écran. Grâce à ce module, l'utilisateur peut rentrer divers paramètres nécessaires à la conduite d'un essai, notamment les principales caractéristiques du moteur à tester, la vitesse visée pour celui-ci, le nombre de points qui définissent la courbe à reproduire, les valeurs de ces points ... Divers interfaces spécifiques peuvent être en outre prévus, notamment pour la saisie des points de la courbe à reproduire : une table à digitaliser 6 et un oscilloscope numérique 7 contenant en mémoire ladite courbe en sont des exemples.

L'étage A comporte en outre un module d'horloge 8 adapté à générer un signal d'horloge H à une fréquence $\underline{f}$ avantageusement programmable (à partir du choix des paramètres) pendant un nombre de cycles (nombre de périodes de la courbe à reproduire) également programmable. Bien entendu, la fréquence $\underline{f}$ du signal d'horloge est très supérieure à la fréquence de cycle, par exemple d'un facteur d'au moins 100 voire 1000 selon le degré de précision avec laquelle on veut définir le profil de la courbe de commande à appliquer au moteur.

Ce module d'horloge 8 est adapté à être activé par un ordre de départ en provenance de l'unité de gestion et de calcul 2 et à lui renvoyer un signal de fin de cycle d'essai ; il reçoit en outre de l'unité 2 un signal déterminant la fréquence programmable.

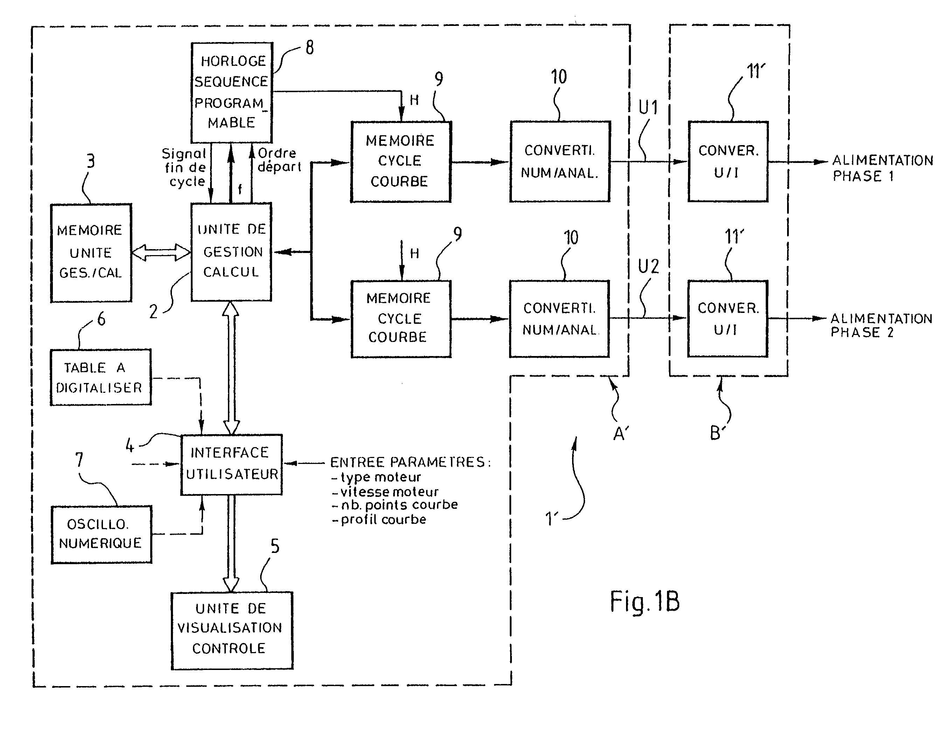

A l'unité de gestion et de calcul sont en outre connectés en parallèle des unités de mémoire déclenchable 9 identiques dont le signal d'activation ou de pilotage est le signal d'horloge H. Il y a autant de telles unités 9 qu'il y a de phases ou d'enroulements à commander pour le moteur pas-à-pas considéré. Ces unités sont ici au nombre de quatre, ce qui correspond au cas d'un moteur pas-à-pas à quatre phases (qui sera repéré par M4 dans la suite) ; la figure 1B représente une variante de réalisation (type A') comportant deux unités 9 pour le cas d'un moteur pas-à-pas à deux phases (qui sera repéré par M2 dans la suite).

Ces unités 9 contiennent les valeurs successives des points de la courbe à générer pour chaque phase considérée, et elles émettent à leur sortie, à la fréquence $\underline{f}$ du signal d'horloge, un signal numérique qui prend successivement ces valeurs. Ces valeurs de points ont une fréquence $\underline{n}$ et leur nombre $\underline{m}$, supérieur ou égal à $\underline{n}$, peut correspondre, selon les besoins, à un nombre entier, ou au contraire non entier de cycles de $\underline{n}$ valeurs.

En aval de chaque unité 9 est prévu un convertisseur numérique/analogique 10 à la sortie duquel apparaît une tension U ($U_1$ pour la phase 1, $U_2$ pour la phase 2 et ainsi de suite) qui approxime la courbe à réaliser, selon un profil arbitrairement fixé par le choix des valeurs stockées dans les unités de mémoire déclenchable 9, lesquelles ont pu être saisies, soit au clavier, soit par l'un des éléments 6 et 7 notamment par échantillonnage.

Chaque unité de mémoire déclenchable 9 et le convertisseur numérique/analogique 10 associé constitue un module générateur de signal arbitraire.

En fait, si les courbes stockées dans chacune des unités 9 sont différentes à un instant donné elles se déduisent l'une de l'autre par déphasage d'un pas électrique, de sorte qu'il suffit de saisir une seule de ces courbes et d'en faire déduire ensuite les autres par l'unité de gestion et de calcul 2 (cela sera précisé plus loin).

L'étage de puissance B ou B' comporte principalement, en aval de chaque générateur de signal arbitraire 9 + 10, un convertisseur tension/courant 11 ou 11', destiné à fournir en sortie un signal d'intensité I ($I_1$, $I_2$ ... pour les diverses phases) qui est proportionnel au signal de tension $U_1$, $U_2$... avec une amplitude maximale compatible avec le moteur considéré, ce qui permet que ce signal d'intensité soit appliqué directement à l'enroulement considéré.

Les convertisseurs 11 ou 11' sont respectivement au nombre de quatre pour un moteur à quatre phases, et au nombre de deux pour un moteur à deux phases.

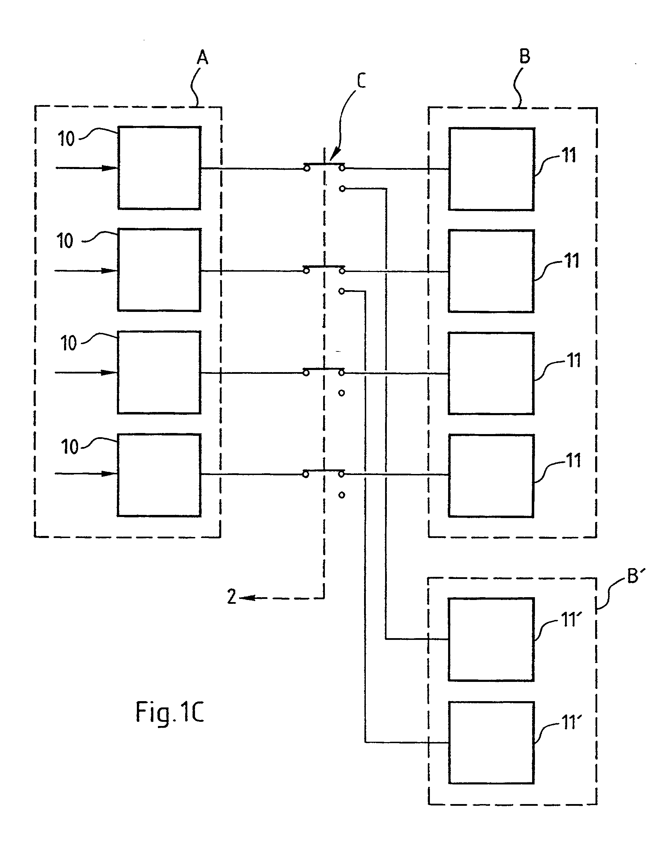

La figure 1C représente un banc universel de simulation adapté à tester et étudier aussi bien un moteur à deux phases qu'un moteur à quatre phases.

Ce banc comporte l'étage numérique A de génération de signal du dispositif de la figure 1A et chacun des étages analogiques de puissance B et B' des figures 1A et 1B.

Un circuit de commutation C, commandable par l'unité de calcul 2 ou commutable à la main permet, au choix, de relier deux prédéterminés des convertisseurs numériques-analogiques à l'étage B', soit l'ensemble des quatre convertisseurs 10 à l'étage B.

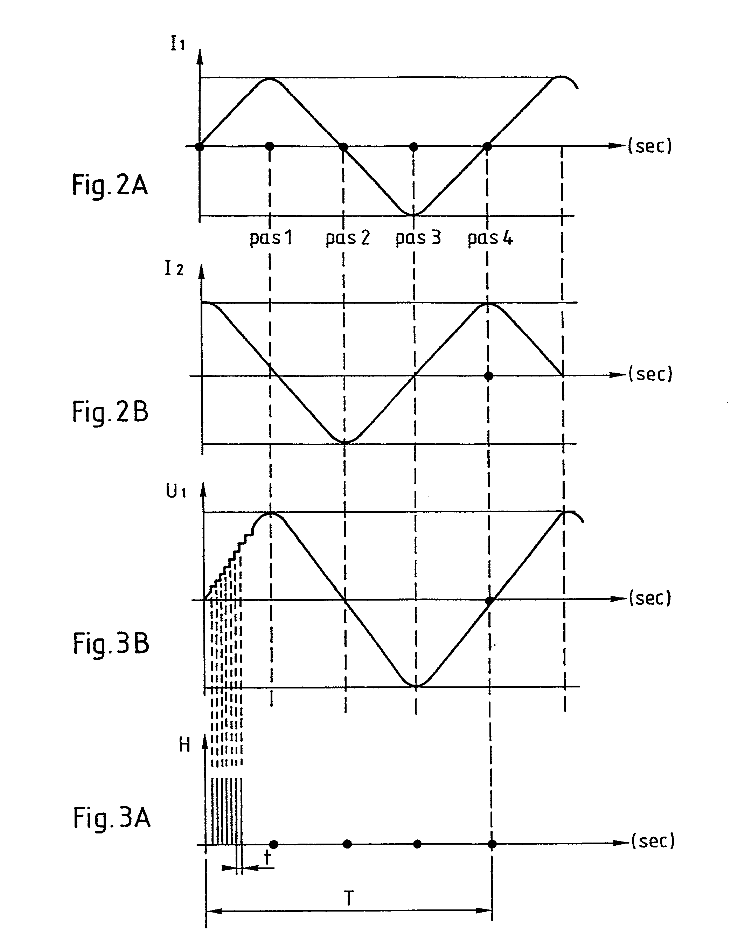

Les figures 2A et 2B rappellent, dans le cas très simple d'une commande en sinus/cosinus, la relation existant entre les intensités $I_1$ et $I_2$ circulant dans les enroulements d'un moteur pas-à-pas à deux phases : elles sont identiques quoique déphasées d'un pas (chaque période ou cycle se décompose en quatre pas égaux).

A la figure 3A est représenté le signal d'horloge H ; pour chacune des impulsions de ce signal le signal $U_1$ prend la valeur du point suivant dans la courbe stockée dans l'unité de mémoire déclenchable. Dans la mesure où la période $\underline{t}$ de ce signal est beaucoup plus petite que la période T du signal $U_1$, la génération discontinue de $U_1$ lui donne toutefois une allure apparemment continue.

On comprend que de la sorte, par cessation du signal d'horloge à un moment approprié on peut "figer" le moteur pas à pas pour un point quelconque des courbes d'alimentation de ses enroulements.

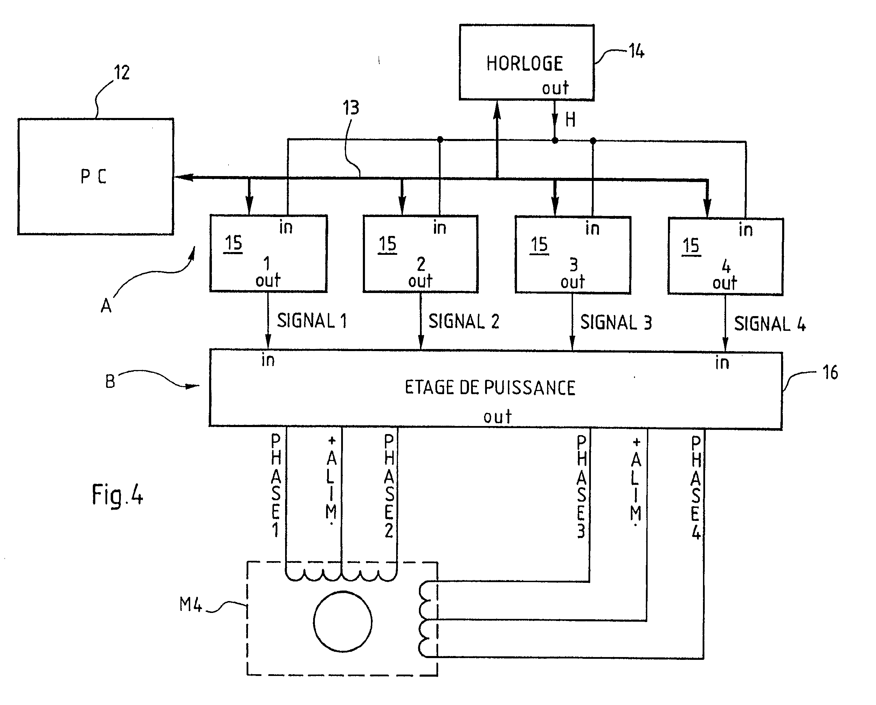

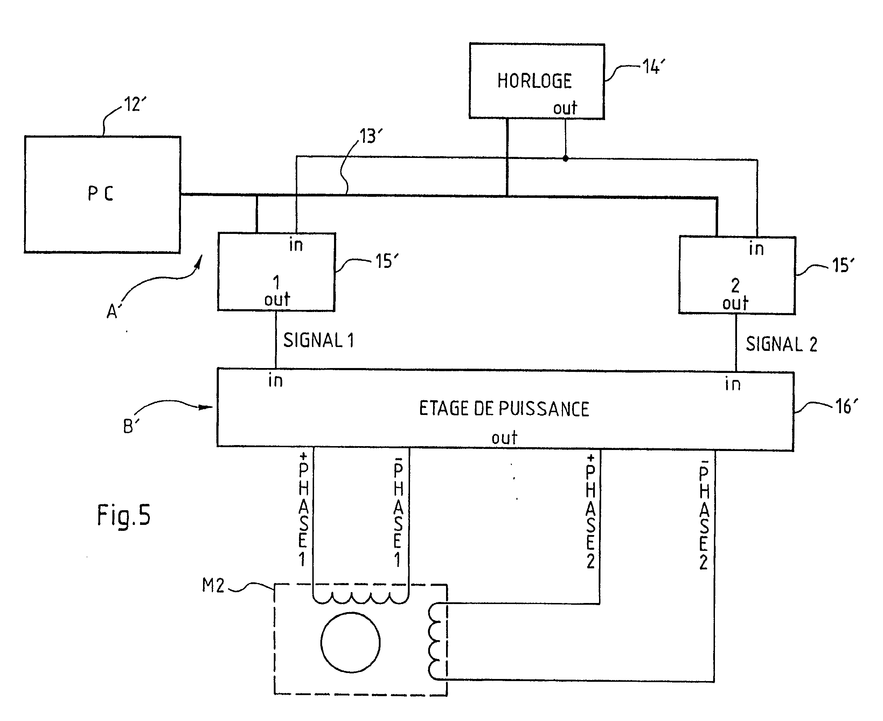

Les figures 4 et 5 présentent deux modes de réalisation des dispositifs des figures 1A et 1B.

Dans chacun des cas l'ensemble des éléments 2, 3, 4 et 5 est constitué par un micro-ordinateur (aussi appelé calculateur) repéré 12 dans son ensemble (en fait l'indice "prime" est ajouté pour ce qui concerne le dispositif de la figure 5).

A un bus de liaison 13 (ou 13') sont connectées une carte d'horloge notée 14 (ou 14') correspondant à l'unité d'horloge 8 (ou 8'), ainsi que quatre (ou deux) cartes de génération de signal arbitraire notées 15 (ou 15') correspondant chacune à une unité de mémoire déclenchable 9 et à son convertisseur numérique/analogique 10 (ces cartes 15 et 15' sont identiques). En aval de ces cartes 15 (ou 15') est connectée une carte de puissance et de conversion 16 (ou 16') dont la structure sera détaillée plus loin et dont les sorties sont connectées aux enroulements du moteur M2 ou M4 considéré.

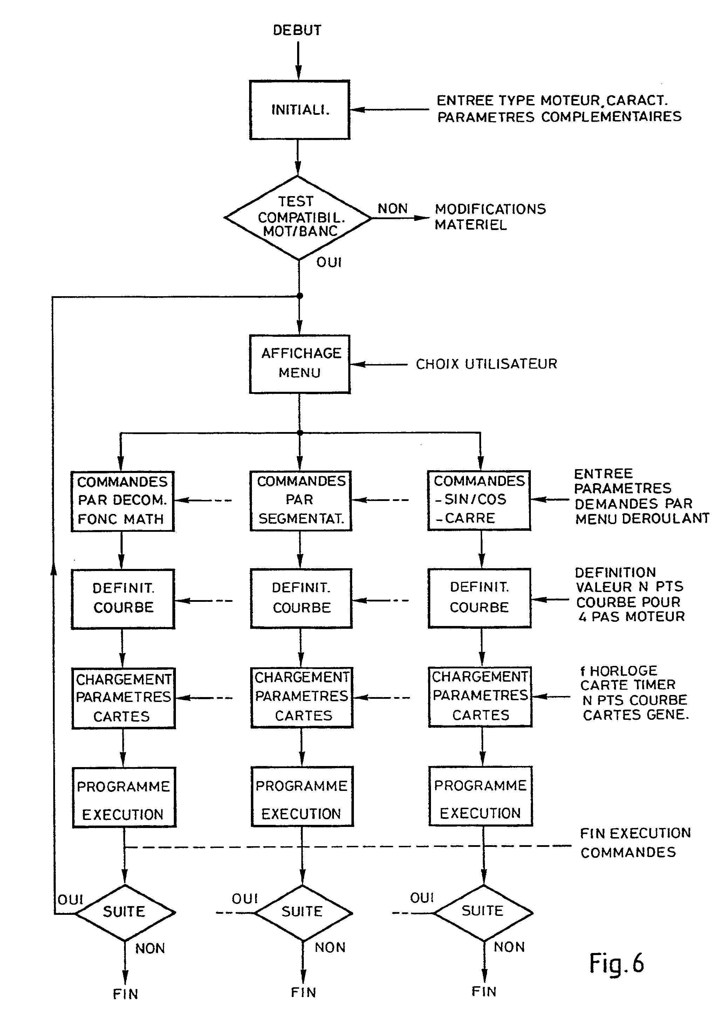

Le calculateur 12 ou 12' pilote l'ensemble des cartes précitées au moyen d'un logiciel approprié dont un organigramme élémentaire est donné à la figure 6. Il se comprend aisément par simple lecture.

En résumé, dans une phase d'initialisation, on précise le type de moteur et ses caractéristiques ainsi que d'éventuels paramètres complémentaires. On teste ensuite par logiciel la compatibilité entre le banc et les caractéristiques du banc à tester ; si ce test est négatif il faut modifier les composants du banc 1. Dans l'exemple considéré, plusieurs options sont offertes selon que l'on veut définir la courbe de commande par décomposition en fonctions mathématiques élémentaires telles que exponentielles, logarithmes, sinus/cosinus ... ou en combinaison de ces fonctions (voir la colonne de gauche), par segmentation (c'est le cas indiqué ci-dessus pour des profils quelconques) -voir la colonne du milieu- ou par des profils géométriques simples, sinus ou cosinus ou carrés ou créneaux. Après avoir choisi l'option on rentre successivement les paramètres qui sont nécessaires, pour définir complètement la courbe désirée, le nombre de points, le nombre de cycles, la fréquence d'horloge etc... On commande ensuite l'exécution du programme proprement dit, c'est-à-dire la génération du signal d'intensité destiné à chaque enroulement. On peut ensuite soit opter pour un nouvel essai, soit choisir de tout arrêter.

Le fonctionnement du banc peut ainsi se décrire comme suit.

La carte d'horloge 14 ou 14' délivre le signal d'horloge dont le nombre de cycles est programmé pour l'application (à ce nombre de cycles correspond un nombre de pas moteur).

Ce signal d'horloge est ensuite aiguillé vers chacune des cartes de génération de signal arbitraire 15 ou 15' qui sont alors utilisées en mode "horloge externe" (mode esclave), permettant la synchronisation des signaux délivrés. On obtient ainsi un signal analogique évoluant au rythme de l'horloge délivrée par la carte d'horloge.

Les paramètres fonctionnels des cartes 15 ou 15' sont programmables par logiciel : le nombre de points par cycle, l'amplitude correspondant à chaque point, cette dernière pouvant évoluer entre plus et moins la tension de sortie maximum de la carte.

Il est à noter qu'à un cycle du signal programmé dans une carte de génération de signal arbitraire correspond un signal de commande de quatre pas moteur pour une phase.

Ainsi, en choisissant judicieusement les divers paramètres des cartes d'horloge et de génération de signal arbitraire, le moteur pas-à-pas peut être commandé avec n'importe quel type de signal, suivant le besoin de l'utilisateur.

L'interruption du signal d'horloge entraînera le maintien à sa dernière valeur du signal de sortie des cartes de génération de signal arbitraire donc l'arrêt du moteur pas-à-pas.

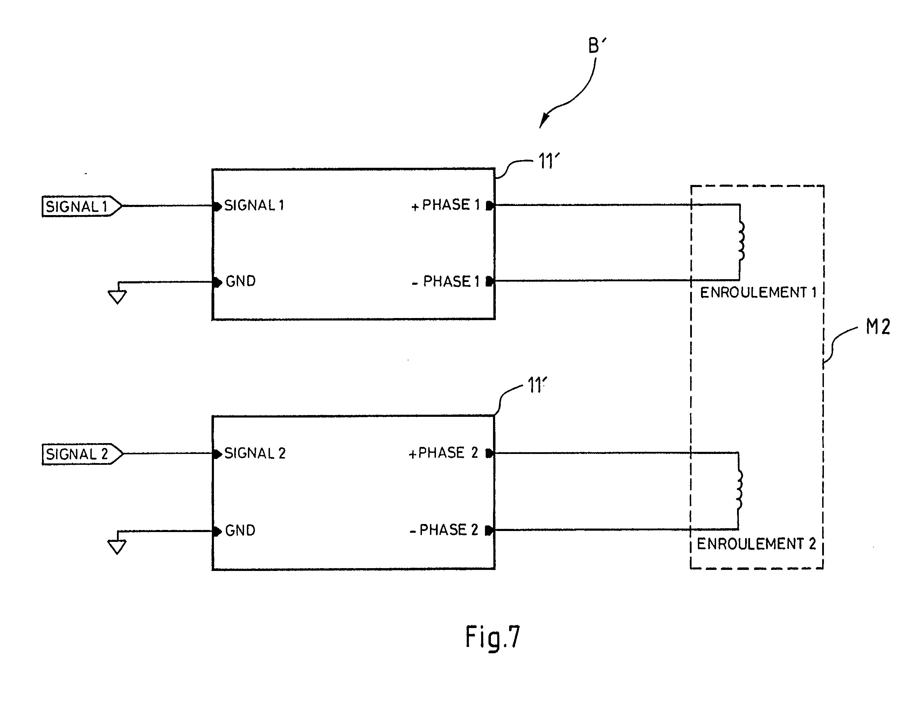

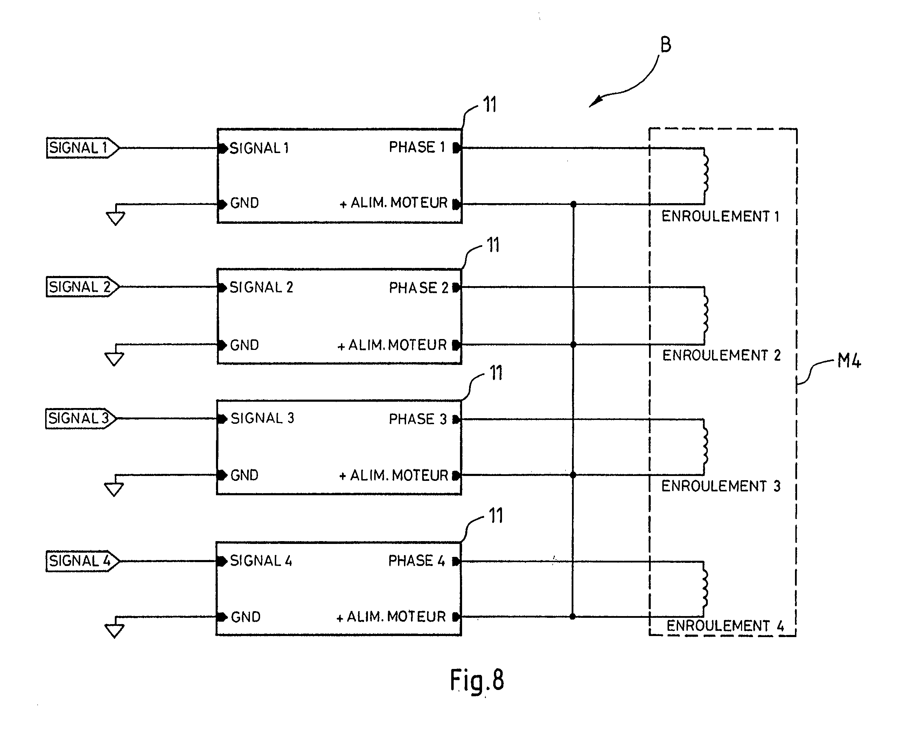

Ainsi qu'on l'a déjà indiqué l'interface électronique de puissance B ou B' est essentiellement un convertisseur tension/courant. Les signaux analogiques issus des cartes 15 ou 15' sont convertis en signaux de commande en courant proportionnel à ces signaux. Pour les deux configurations de moteurs, ce convertisseur est modélisé par les quadripôles des figures 7 et 8 avec une entrée à la masse.

Une des possibilités de réalisation de ces convertisseurs tension/courant est décrite ci-dessous, mais tout autre montage peut être utilisé.

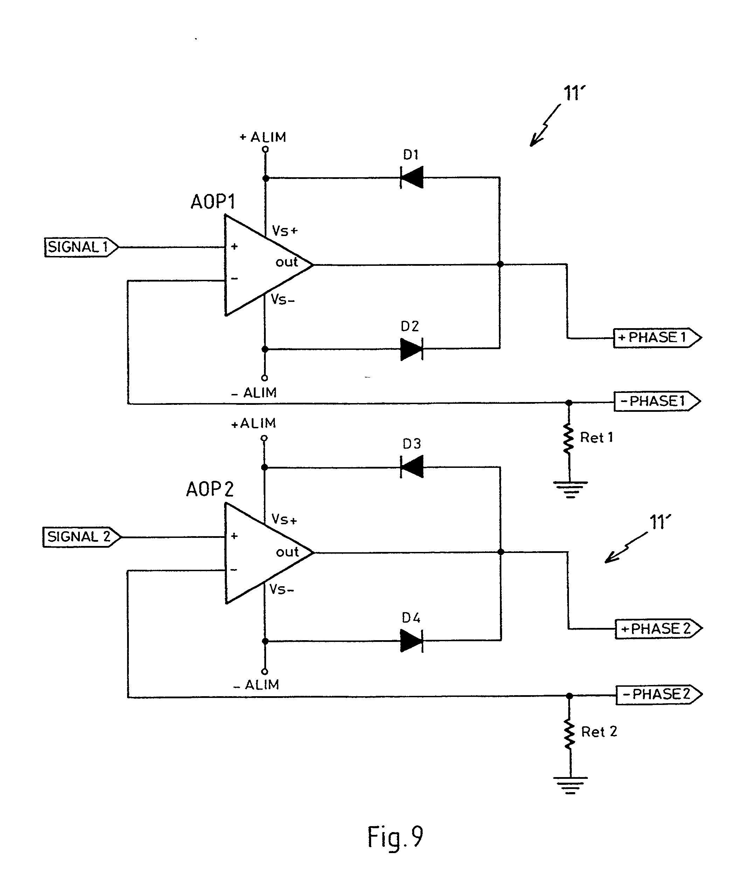

Le schéma général de fonctionnement est montré à la figure 9 pour le cas du moteur M2.

Le fonctionnement va être étudié pour le premier enroulement moteur, par analogie on déduira le fonctionnement du deuxième enroulement.

Ce convertisseur tension/courant 11' est un montage classique élaboré autour d'un amplificateur opérationnel de puissance repéré AOP et d'une résistance Ret mettant la borne négative de l'enroulement à la masse.

En considérant l'amplificateur opérationnel idéal, la fonction de transfert d'un tel montage est réduite à l'expression :

$$I = \frac{Vsignal\ 1}{Ret}$$

on va reproduire ainsi un courant de commande I de l'enroulement moteur qui est directement proportionnel à la tension de commande "Vsignal 1", mais il suffira de choisir judicieusement Ret sachant que Vsignal 1 ne peut varier qu'entre + Vmax et - Vmax et que l'on ne doit pas dépasser le courant maximum pouvant traverser la bobine du moteur.

De plus, on s'affranchit de bon nombre de problèmes liés à une commande de type en tension tels que le temps d'établissement du courant dans l'enroulement, la nécessité d'utiliser des circuits anti-oscillants ainsi que de nombreuses protections souvent difficiles à définir.

Les diodes D1 et D2 (D3 et D4) ont pour rôle de protéger le montage contre les pointes de tension dues

7

à l'inductance du moteur.

On vient donc de voir que par cette méthode, si on programme Vsignal 1 tel qu'il reproduise un cycle de rotation du moteur restituant dans le temps un signal déjà observé sur les enroulements du moteur en expérimentation, on pourra reproduire en ambiance laboratoire le fonctionnement du moteur dans les conditions critiques d'expérimentation. De plus, le couple étant proportionnel au courant, il suffira de déterminer la courbe du couple souhaité pour pouvoir la reproduire au niveau enroulement moteur.

La résistance Ret est fonction du type de moteur pas-à-pas choisi, donc du courant Imax admissible par enroulement. Pour une application universelle de ce générateur de commande, Ret peut être une résistance programmable par l'utilisateur. Deux paramètres essentiels de cette résistance sont à considérer :

– sa puissance maximale admissible $<Ret.I^2max$

– sa précision pour minimiser l'erreur sur I (une valeur de 1% est acceptable).

L'amplificateur opérationnel a été considéré comme idéal. Compte tenu des performances des amplificateurs opérationnels actuels et de la précision de I recherchée, cette approximation est tout à fait acceptable.

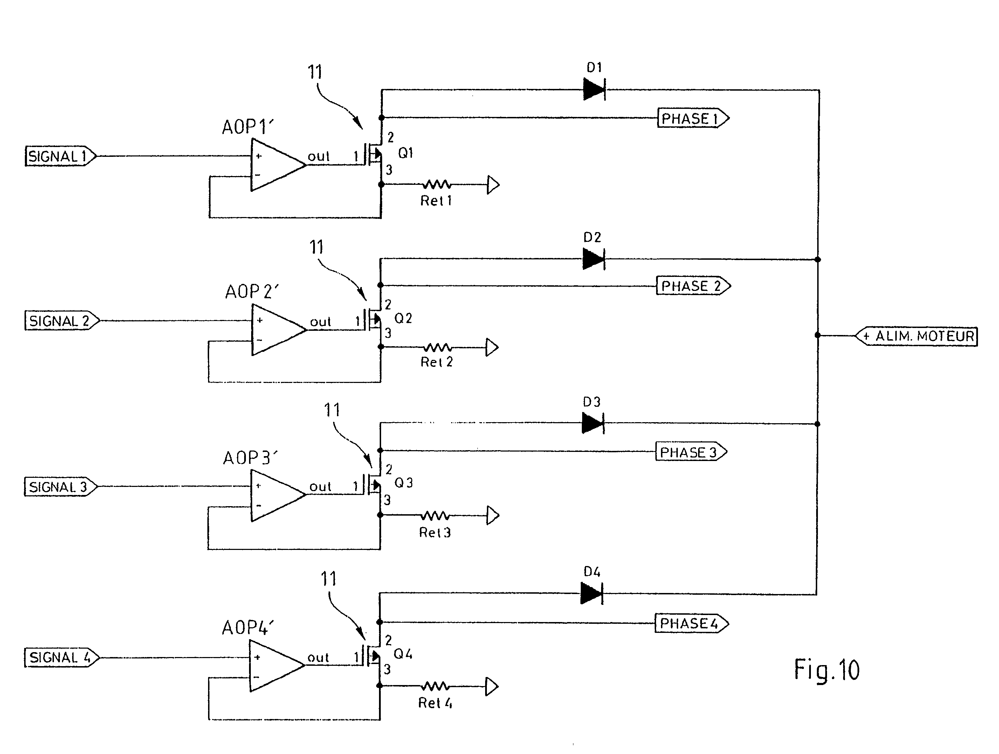

Dans le cas du moteur quatre phases considéré à la figure 10, le fonctionnement va être étudié pour le premier enroulement moteur : par analogie on déduira le fonctionnement des autres enroulements.

Ce convertisseur tension/courant 11 est un montage dérivé du précédent, élaboré autour d'amplificateurs opérationnels notés AOP1', AOP2'. L'amplificateur opérationnel n'est plus utilisé dans ce cas comme un élément de puissance car il met en conduction un transistor MOS de puissance noté Q1, (Q2) qui ne requiert sur sa grille qu'un très faible courant.

Compte tenu du mode de fonctionnement d'un moteur pas-à-pas à quatre phases, le point milieu des enroulements 1 et 2 (ou 3 et 4) est porté à un potentiel permanent positif (+ ALIM MOTEUR).

Lorsque le transistor MOS est à l'état passant, en considérant l'amplificateur opérationnel idéal, la fonction de transfert d'un tel montage est réduite à l'expression :

$$I = \frac{Vsignal\ 1}{Ret}$$

Il est à signaler qu'une des caractéristiques essentielles du transistor MOS est d'avoir une résistance drain source (notée RDS (ON)) faible, donc d'avoir la possibilité d'être traversé par un courant élevé (dans la limite des caractéristiques du composant) en n'engendrant que de faibles pertes par effet JOULE.

Comme il a été dit ci-dessus, on peut ainsi reproduire en programmant la forme du signal adéquat à Vsignal 1, la commande désirée à l'enroulement moteur et donc, en généralisant aux quatre signaux issus des cartes de génération de signaux arbitraires, reproduire tous les types de fonctionnement moteur voulus.

A titre d'exemple, le besoin de ce banc de commande étant voué à des applications spatiales, la réalisation est dans un premier temps applicable à deux types de moteurs pas-à-pas qualifiés spatial de marque SAGEM : moteur deux phases à commande bipolaire du type 23PP, moteur quatre phases à commande unipolaire type 11PP.

Toutefois, en opérant quelques modifications mineures au niveau des cartes électroniques d'interface, ce banc pourra commander la totalité des moteurs pas-à-pas du marché.

A titre d'exemple le calculateur 12 de la figure 1C est du type PC AT. Sur son bus interne 13 ou 13' sont implantées une carte d'horloge 14 ou 14' de type TCG10 de marque CONTEC et quatre cartes 15 ou 15' de génération de signal arbitraire WSB10 de marque QUATECH.

Ces cartes sont des cartes universelles qui peuvent être utilisées pour d'autres applications que celles concernant les commandes de moteurs pas-à-pas. Il existe d'autres fabricants qui proposent des produits équivalents répondant à notre besoin. Sous réserve d'aménager le logiciel en fonction des cartes utilisées, d'autres choix de cartes sont tout à fait envisageables, en particulier dans le cas où l'application nécessiterait une plus grande précision donc un nombre de points d'échantillonnage plus élevé et une résolution plus grande.

Le signal de sortie des cartes de génération de signal arbitraire peut être programmé avec une amplitude comprise entre ± 5,12 V avec une résolution de 1,25 mV (on dispose de 12 bits de résolution sur l'enveloppe), la courbe à générer peut être définie par 2048 points, soit 512 points pas-à-pas moteur étant donné qu'à un cycle de courbe correspond quatre pas moteur.

Tous les paramètres tels que fréquence, rapport cyclique, résolution peuvent être programmés par logiciel.

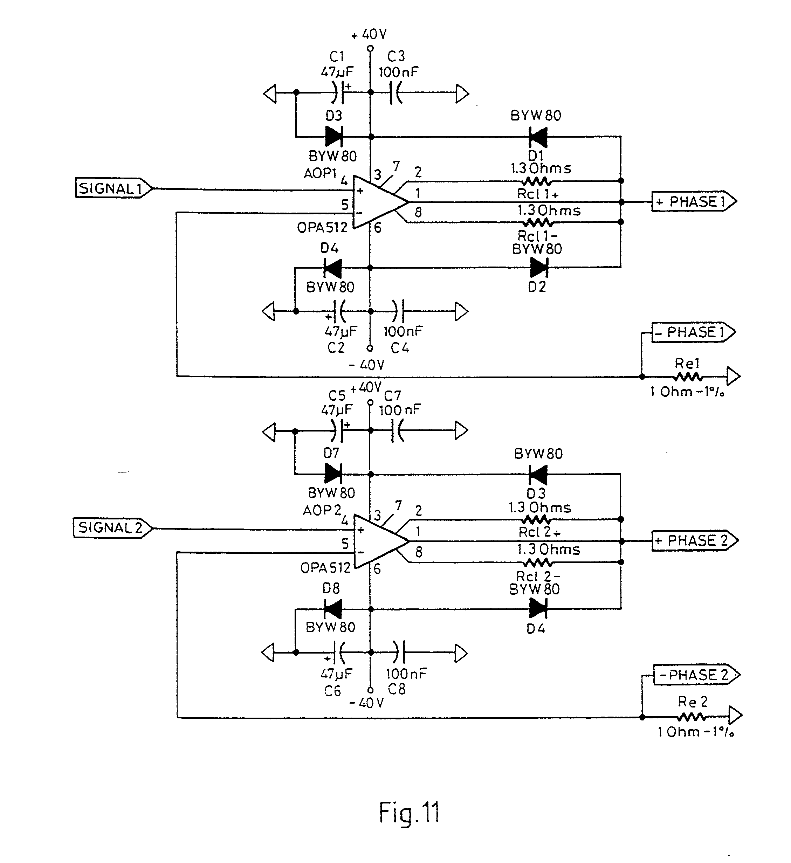

Le schéma de la carte électronique de la figure 11 est conforme à la structure générale donnée à la figure 9. L'amplificateur opérationnel choisi est un modèle OPA 512 de chez BURR-BROWN. Les principales caractéristiques de ce circuit sont :

– tension maximum de sortie ± 50 V,

– courant maximum de sortie 15 A,

ce qui leur confère une parfaite adaptation pour la plupart des moteurs pas-à-pas deux phases.

De plus, le courant de sortie peut être limité par les résistance RCL (1 et 2) ; pour l'application RCL = 1,3 Ohm :

$$I.\ limit = \frac{0,65}{RCL + 0,007}\ soit\ environ\ 0,5\ A \qquad (1)$$

L'utilisation de ce circuit nécessite cependant quelques protections au niveau des bornes d'alimentation et de sortie, c'est le rôle des diodes rapides BYW80.

La résistance Ret est une résistance de puissance bobinée (non inductive) de valeur Ohmique 1 Ohm de précision 1 % :

$$I\ Max.\ mesurable = \frac{Vsignal\ max.}{Ret} = 5\ A$$

Le courant de sortie de l'amplificateur opérationnel a été volontairement limité à une faible valeur (0,5 A) afin d'éviter tout dommage accidentel sur le moteur 23PP. Pour une utilisation du banc avec un autre type de moteur deux phases, il suffira de modifier la valeur des résistances RCL suivant la relation (1).

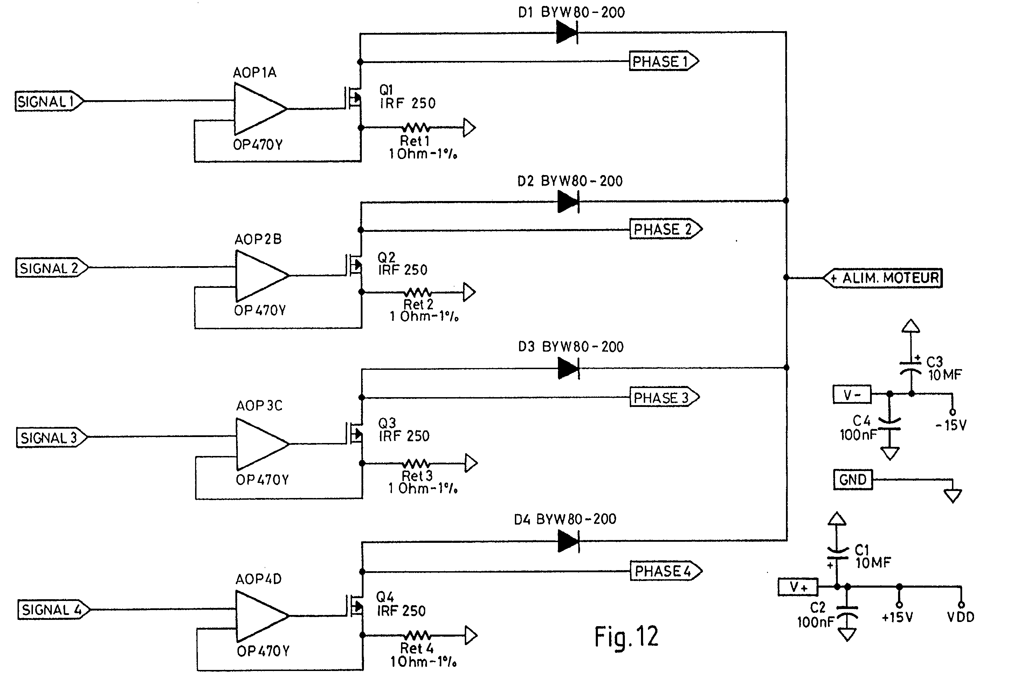

Dans le cas du moteur quatre phases, le schéma détaillé de la figure 12 est conforme à la structure générale donnée à la figure 10.

L'amplificateur opérationnel est un modèle OP470 (quadruple amplificateur) de chez PMI alimenté par une tension de ± 15 V. Le transistor MOS est un modèle IRF 250 canal N de chez INTERNATIONAL RECTIFIER.

Les principales caractéristiques de ce circuit sont :

– RDS (ON) = 0,085 Ohm,

– IDmax. = 30 A.

La tension + ALIM.MOTEUR étant extérieure à la carte (donc ajustable par l'utilisateur) et étant donné le fort courant DRAIN admissible par le transistor MOS, ce montage est adapté pour la plupart des moteurs pas-à-pas quatre phases.

Il est à signaler que les pointes de courant générées par les charges inductives peuvent être très importantes et risquent de détruire le transistor MOS. C'est pourquoi une diode BYW80 de protection est intégrée afin d'absorber cette pointe, donc d'éviter le claquage du transistor.

Enfin, comme dans le cas précédent, Ret est une résistance de puissance bobinée (non inductive) de valeur 1 Ohm de précision 1 % :

$$I\ Max.\ mesurable = \frac{Vsignal\ max.}{Ret} = 5\ A$$

Dans ces schémas des figures 11 et 12 les capacités de filtrage sont montées au plus près des amplificateurs opérationnels.

L'une des applications de l'invention a été de simuler le fonctionnement en laboratoire, à la température ambiante, d'un moteur de marque SAGEM de type 11PP supraconducteur fonctionnant à la température de 4°Kelvin soit -269°C, ceci dans le cadre des essais de la caméra ISOCAM (observations spatiales infrarouges).

Le but de ces essais était de déterminer la marge de motorisation du système, de relever une courbe du couple en fonction de la position du rotor moteur, ainsi que la loi de commande optimale.

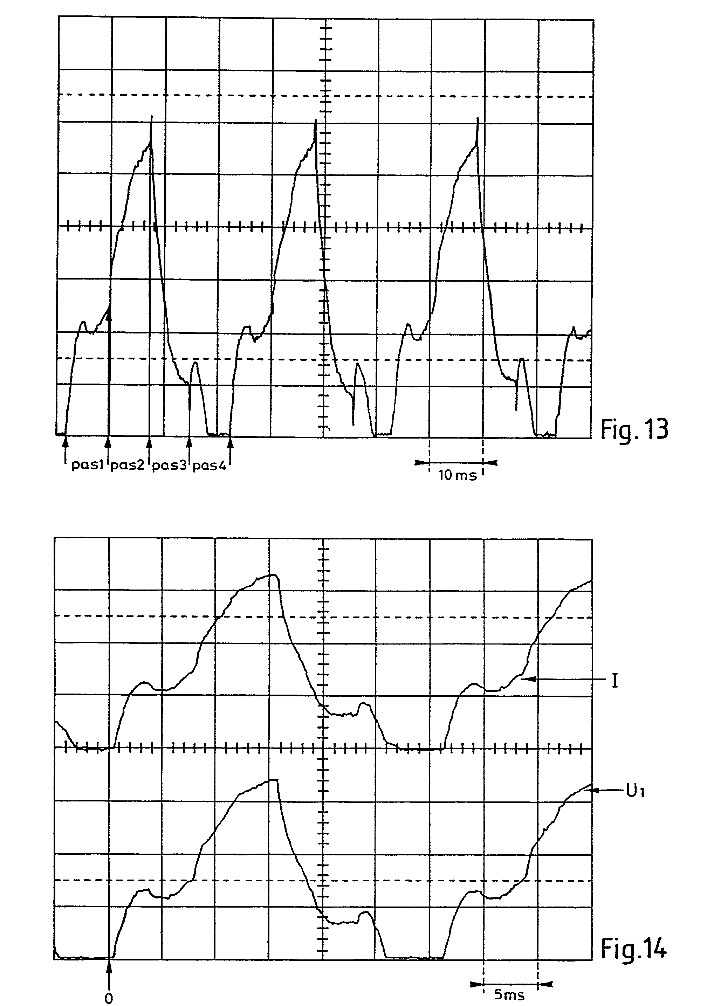

Pour cela, il a été relevé à l'aide d'une sonde de courant et un oscilloscope numérique l'allure du courant traversant les enroulements moteur (l'enregistrement du courant d'une seule phase est nécessaire en sachant que l'allure du courant dans les autres phases est strictement identique et seulement déphasée de 90°, 180° et 270° électrique par rapport à celle-ci). Le relevé effectué est présenté à la figure 13, avec un marquage de l'emplacement des pas électriques moteur.

A partir de ce relevé, le signal est reconstitué sur quatre pas pour deux mille points mémorisés dans chacune des quatre cartes 15 de génération de signal arbitraire. La carte d'horloge 14 synchronise ces cartes. La vitesse du moteur est fonction de la fréquence programmée de son horloge. Le moteur est prêt à fonctionner en laboratoire à la température ambiante avec la commande en intensité d'un moteur supposé soumis à une température de 4° Kelvin.

La figure 14 montre la similitude entre la courbe d'intensité I que l'on a cherché, dans une application similaire, à reproduire, et la courbe de tension U obtenue à la sortie de l'une des cartes de génération de signal arbitraire.

Il va de soi que la description qui précède n'a été proposée qu'à titre d'exemple non limitatif et que de nombreuses variantes peuvent être proposées par l'homme de l'art sans sortir du cadre de l'invention.

**Revendications**

1. Dispositif de simulation de commande pour un moteur pas-à-pas (M2, M4) à N enroulements, comportant :
   - un étage numérique de génération de signal (A, A') comportant :
     . une unité de calcul (12, 12') comportant une unité centrale (2), à laquelle sont connectés un module périphérique d'entrées/sorties (4) destiné à un utilisateur, un module de mémoire (3) et un module d'horloge (8, 14, 14') de fréquence $f$,
     . une pluralité d'au moins N unités de mémoire déclenchable (9) identiques connectées en parallèle à l'unité de calcul, pilotées par le module d'horloge et suivies chacune par un convertisseur numérique-analogique (10) identique, ces unités de mémoire étant destinées à contenir des suites cycliques de $m$ valeurs de signal de période $n$, sensiblement identiques d'une unité de mémoire à l'autre à un décalage de n/4 près correspondant à un pas,
   - un étage analogique de puissance comportant une pluralité de N convertisseurs tension-courant (11, 11') identiques, raccordés chacun à la sortie d'un convertisseur numérique-analogique et dont la sortie est destinée à être raccordée à l'un des enroulements dudit moteur pas-à-pas, pour lui appliquer un signal de fréquence f/n.

2. Dispositif selon la revendication 1, caractérisé en ce que l'étage numérique de génération du signal (A) comporte quatre unités de mémoire déclenchable et quatre convertisseurs numériques-analogiques, en ce qu'il y a un premier et un second étages analogiques de puissance (B, B') comportant respectivement quatre et deux convertisseurs tension-courant, et en ce que ce dispositif comporte un circuit de commutation (C) adapté à connecter, au choix, les quatre convertisseurs numériques-analogiques aux quatre convertisseurs tension-courant du premier étage analogique de puissance, ou deux convertisseurs numériques-analogiques prédéterminés aux deux convertisseurs tension-courant du second étage analogique de puissance.

3. Dispositif selon la revendication 2, caractérisé en ce que le circuit de commutation (C) est commandé par l'unité de calcul.

4. Dispositif selon l'une quelconque des revendications 1 à 3, caractérisé en ce que chaque convertisseur numérique-analogique et l'unité de mémoire déclenchable associée forme conjointement une même carte (15, 15').

5. Dispositif selon l'une quelconque des revendications 1 à 4, caractérisé en ce que la pluralité de convertisseurs tension/courant dudit étage analogique de puissance (B, B') est regroupée sur une même carte.

6. Dispositif selon l'une quelconque des revendications 1 à 5, caractérisé en ce que la fréquence $f$ du module d'horloge est programmable.

7. Dispositif selon l'une quelconque des revendications 1 à 6, caractérisé en ce que la période $n$ des suites cycliques de valeurs stockées dans la pluralité d'unités de mémoire déclenchable vaut au moins 100.

8. Dispositif selon la revendication 7, caractérisé en ce que la période $n$ vaut au moins 1000.

9. Dispositif selon l'une quelconque des revendications 1 à 8, caractérisé en ce que, l'étage analogique de puissance étant adapté à être connecté à un moteur à deux phases, chaque convertisseur tension-courant comporte un amplificateur opérationnel (AOP1, AOP2) dont l'entrée non inverseuse reçoit un signal de tension dont la sortie est appliquée à la borne positive de l'enroulement associé et dont l'entrée inverseuse est connectée à la borne négative de l'enroulement en étant reliée à la masse par une résistance (Ret).

10. Dispositif selon l'une quelconque des revendications 1 à 9, caractérisé en ce que, l'étage analogique de puissance étant adapté à être connecté à un moteur à quatre phases, chaque convertisseur tension-courant comporte un amplificateur opérationnel (AOP1′, AOP2′ ...) dont l'entrée non inverseuse reçoit un signal de tension, dont la sortie est connectée à la grille d'un transistor MOS dont la source est connectée à l'enroulement considéré, et dont l'entrée inverseuse est connectée au drain du transistor MOS en étant reliée à la masse par une résistance (Ret).

Fig.1A

EP 0 455 537 A1

Fig. 1B

A            C            B

10                                    11

10                                    11

10                                    11

10                                    11

2 ←

B'

11'

Fig.1C                               11'

Fig. 2A

Fig. 2B

Fig. 3B

Fig. 3A

Fig.4

16

Fig.5

DEBUT

INITIALI. ← ENTREE TYPE MOTEUR, CARACT. PARAMETRES COMPLEMENTAIRES

TEST COMPATIBIL. MOT/BANC → NON → MODIFICATIONS MATERIEL

OUI

AFFICHAGE MENU ← CHOIX UTILISATEUR

COMMANDES PAR DECOM. FONC MATH ← --- COMMANDES PAR SEGMENTAT. ← --- COMMANDES -SIN/COS -CARRE ← ENTREE PARAMETRES DEMANDES PAR MENU DEROULANT

DEFINIT. COURBE ← --- DEFINIT. COURBE ← --- DEFINIT. COURBE ← DEFINITION VALEUR N PTS COURBE POUR 4 PAS MOTEUR

CHARGEMENT PARAMETRES CARTES ← --- CHARGEMENT PARAMETRES CARTES ← --- CHARGEMENT PARAMETRES CARTES ← f HORLOGE CARTE TIMER N PTS COURBE CARTES GENE.

PROGRAMME EXECUTION   PROGRAMME EXECUTION   PROGRAMME EXECUTION

FIN EXECUTION COMMANDES

OUI ← SUITE   OUI --- SUITE   OUI --- SUITE

NON   NON   NON

FIN   FIN   FIN

Fig.6

Fig.7

M2

ENROULEMENT 1

ENROULEMENT 2

B´

11´

11´

+ PHASE 1

- PHASE 1

+ PHASE 2

- PHASE 2

SIGNAL 1

GND

SIGNAL 2

GND

SIGNAL 1

SIGNAL 2

M4

B

PHASE 1    ENROULEMENT 1
+ ALIM. MOTEUR
SIGNAL 1
GND
SIGNAL 1
11

PHASE 2    ENROULEMENT 2
+ ALIM. MOTEUR
SIGNAL 2
GND
SIGNAL 2
11

PHASE 3    ENROULEMENT 3
+ ALIM. MOTEUR
SIGNAL 3
GND
SIGNAL 3
11

PHASE 4    ENROULEMENT 4
+ ALIM. MOTEUR
SIGNAL 4
GND
SIGNAL 4
11

Fig.8

Fig. 9

Fig.10

Fig.11

Fig.12

Fig. 13

pas1 pas2 pas3 pas4

10 ms

I

$U_1$

Fig.14

0

5ms

Office européen
des brevets

**RAPPORT DE RECHERCHE EUROPEENNE**

Numero de la demande

EP    91 40 1052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2440642 (GILSON MEDICAL ELECTRONICS) <br> * le document en entier * <br> --- | 1 | H02P8/00 |
| A | DE-U-8915104 (SIEMENS AG) <br> * revendications 1-9; figure 1 * <br> --- | 1 | |
| A | INSTRUMENTS AND EXPERIMENTAL TECHNIQUES. <br> vol. 29, no. 1, février 1986, NEW YORK US <br> pages 66 - 68; S.G. BASILADZE ET AL: <br> "UNIVERSAL STEPPING-MOTOR INTERFACE" <br> * le document en entier * <br> --- | 1 | |
| A | ELEKTRIE. <br> vol. 42, no. 2, 1988, BERLIN DD <br> pages 45 - 49; V. MUELLER ET AL: <br> "SIMULATION VON REGELKREISEN DER ANTRIEBSTECHNIK <br> MIT DEM DIGITALEN SIMULATIONSSYSTEM DS-88" <br> * le document en entier * <br> ----- | 1 | |

|  | | | **DOMAINES TECHNIQUES RECHERCHES (Int. Cl.5)** |
|---|---|---|---|
| | | | H02P <br> G05B |

Le présent rapport a été établi pour toutes les revendications

| Lieu de la recherche | Date d'achèvement de la recherche | Examinateur |
|---|---|---|
| LA HAYE | 08 JUILLET 1991 | BEYER F. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P0402)